# EUROPEAN PATENT APPLICATION

(11) **EP 4 307 833 A1**
(43) Date of publication of application: **17.01.2024**
(21) Application number: 22767025.4
(22) Date of filing: 04.03.2022
(51) Int. Cl.: H05B 6/72, H05B 6/78

(54) **MICROWAVE IRRADIATION DEVICE**

(30) Priority: 12.03.2021 JP 2021040835; 12.03.2021 JP 2021040836
(71) Applicant: Toyo Seikan Group Holdings, Ltd., Shinagawa-ku Tokyo 141-8627 (JP)
(72) Inventor: YAMADA, Shinji, Yokohama-shi, Kanagawa 240-0062 (JP); MARUYAMA, Tomoki, Yokohama-shi, Kanagawa 240-0062 (JP); YAMASAKI, Takaaki, Yokohama-shi, Kanagawa 240-0062 (JP)
(74) Representative: Piticco, Lorena
(86) International application number: PCT/JP2022/009403
(87) International publication number: WO 2022/191068

(57) **Abstract**

A microwave irradiation device includes: a holder that holds an irradiated object; a power feeder configured to conduct with an oscillator; and a directional antenna configured to emit microwaves from an irradiation source in an irradiation surface by power feed through conduction via the power feeder.

## Description

### Technical Field

The present invention relates to a microwave irradiation device.

### Background Art

In general, a heating device that dielectrically heats an irradiated object by irradiating the irradiated object with microwaves is known. In the dielectric heating, there is a case that the irradiated object is not uniformly heated for various reasons. Thus, various efforts for uniform heating have been made.

For example, JP 2020-21678 A discloses a microwave heating device in which a microwave reaction container where an irradiated object is placed is arranged in a conductive storage container, and a plurality of dipole antennas are uniformly arranged so as to surround the microwave reaction container. In this microwave heating device, each part is arranged such that the distance between each antenna and the inner wall of the conductive storage is approximately 1/4 of the wavelength of the microwave to be irradiated, in the direction of viewing each dipole antenna from the microwave reaction container. With such arrangement, microwaves emitted from the dipole antenna are directed toward the microwave reaction container. As a result, the irradiated object in the microwave reaction container is uniformly heated.

### Summary of Invention

The above is an example, and there can be various methods for suppressing uneven heating in dielectric heating. An object of the present invention is to suppress uneven heating in a microwave irradiation device.

According to one aspect of the present invention, a microwave irradiation device includes: a holder configured to hold an irradiated object; a power feeder configured to conduct with an oscillator; and a directional antenna configured to emit microwaves from an irradiation source in an irradiation surface by power feed through conduction via the power feeder.

According to the present invention, it is possible to suppress uneven heating in a microwave irradiation device.

### Brief Description of Drawings

FIG. 1A is a front view schematically illustrating an outline of a configuration example of a microwave irradiation device according to a first embodiment.
FIG. 1B is a plan view schematically illustrating an outline of a configuration example of the microwave irradiation device according to the first embodiment.
FIG. 2 is a schematic view illustrating an outline of a configuration example of a loop antenna.
FIG. 3A is a schematic view for explaining an orientation of an antenna.
FIG. 3B is a schematic view for explaining an orientation of an antenna.
FIG. 4 is a plan view schematically illustrating an outline of a configuration example of a microwave irradiation device of a second embodiment.
FIG. 5 is a schematic view for explaining a magnitude of an electric field effective value according to a position along a directional irradiation axis in an example in which antennas are provided to face each other.
FIG. 6 is a plan view schematically illustrating an outline of a configuration example of a microwave irradiation device of a third embodiment.
FIG. 7 is a view schematically illustrating an outline of a configuration example of a microwave irradiation device according to a fourth embodiment.
FIG. 8 is a schematic view for explaining an orientation of an antenna of the fourth embodiment.
FIG. 9 is a schematic view for explaining an orientation of an antenna according to a comparative example.
FIG. 10A is a front view schematically illustrating an outline of a configuration example of a microwave irradiation device according to a fifth embodiment.
FIG. 10B is a plan view schematically illustrating an outline of a configuration example of the microwave irradiation device according to the fifth embodiment.
FIG. 10C is a view schematically illustrating an outline of a configuration example of an end surface viewed from a side at a position of an antenna of the microwave irradiation device according to the fifth embodiment.
FIG. 11 is a schematic view for explaining a positional relationship between an electric field intensity generated by the antenna according to the fifth embodiment and an irradiated object.
FIG. 12 is a schematic view for explaining a positional relationship between an electric field intensity and an irradiated object according to a comparative example.
FIG. 13 is a view schematically illustrating an outline of a configuration example of a microwave irradiation device according to a sixth embodiment.
FIG. 14 is a schematic view for explaining a positional relationship between an electric field intensity generated by the antenna according to the sixth embodiment and an irradiated object.
FIG. 15A is a front view schematically illustrating an outline of a configuration example of a microwave irradiation device according to a seventh embodiment.
FIG. 15B is a plan view schematically illustrating an outline of a configuration example of the microwave irradiation device according to the seventh embodiment.
FIG. 16 is a plan view schematically illustrating an outline of a configuration example of a microwave irradiation device according to an eighth embodiment.
FIG. 17 is a schematic view illustrating an outline of a configuration example of a test device used in Experiment Example 1.
FIG. 18 is a view illustrating a test result example of heating a heat target object placed vertically, according to Experiment Example 1.
FIG. 19 is a view illustrating a test result example of heating the heat target object placed horizontally, according to Experiment Example 1.
FIG. 20 is a view schematically illustrating a configuration example of a test device used in Experiment Examples 2, 3, and 6.
FIG. 21 illustrates a photograph of a food model after heating with an output of 150 W using a test device in Experiment Example 2.
FIG. 22 illustrates a photograph of a food model after heating with an output of 250 W using a professional-use microwave oven as a comparative experiment.
FIG. 23 is a view illustrating an outline of an implementation situation of Experiment Example 3.
FIG. 24 illustrates a photograph of a food model after heating in Experiment Example 3.
FIG. 25A is a perspective view illustrating a thermal coupled analysis result according to Experiment Example 4.
FIG. 25B is a cross-sectional view illustrating the thermal coupled analysis result according to Experiment Example 4.
FIG. 26A is a view illustrating a thermal coupled analysis result in a case where a distance according to Experiment Example 5 is 166.5 mm.
FIG. 26B is a view illustrating a thermal coupled analysis result in a case where the distance according to Experiment Example 5 is 56.5 mm.
FIG. 27 is a view illustrating results of temperature measurement of a center part (solid line) and an outer peripheral part (broken line) of a heat target object according to Experiment Example 6.
FIG. 28 is a view illustrating an outline of a configuration example of a test device used in Experiment Example 7.
FIG. 29 illustrates images obtained by thermography of a first heat target object, a second heat target object, and a third heat target object heated using the test device according to Experiment Example 7.
FIG. 30 illustrates, as a comparative experiment, an image obtained by thermography of a heat target object heated using a professional-use microwave oven.
FIG. 31 is a view illustrating an outline of a model of a microwave irradiation device according to Experiment Example 8.
FIG. 32 illustrates an analysis result of an electric field intensity formed between antennas in the model according to Experiment Example 8.
FIG. 33 illustrates an analysis result of an electric field intensity with respect to an irradiation distance from an oscillator in a waveguide performed as comparative analysis.
FIG. 34 is a view illustrating a thermal coupled analysis result of a heat generation distribution of a heat target object when the heat target object according to Experiment Example 8 is heated.

### Description of Embodiments

### First Embodiment

The first embodiment will be described with reference to the drawings. The present embodiment relates to a microwave irradiation device. The microwave irradiation device of the present embodiment is configured to irradiate an irradiated object with microwaves so as to internally heat the irradiated object. The irradiated object is, though not limited to, a food, for example. Thus, this microwave irradiation device and the microwave irradiation method using the microwave irradiation device can be used for production of food including packaged food, for example. The microwave irradiation device includes a conveyance device, and a plurality of objects to be irradiated are conveyed sequentially and heated sequentially. A plurality of directional antennas that emit microwaves are arranged side by side along the conveyance direction.

### Device Configuration

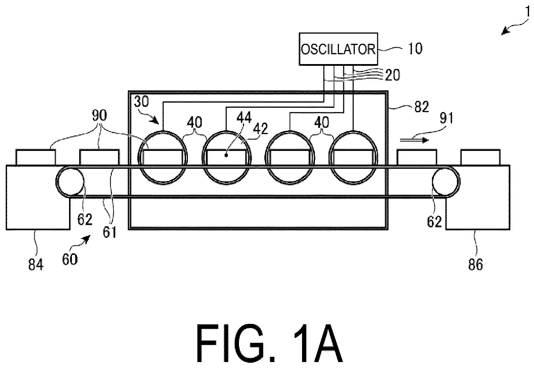

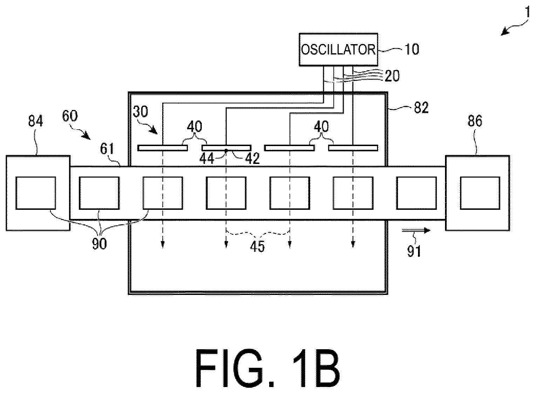

FIG. 1A is a front view schematically illustrating an outline of a configuration example of a microwave irradiation device 1 according to the present embodiment, and FIG. 1B is a plan view schematically illustrating an outline of a configuration example of the microwave irradiation device 1 according to the present embodiment. As illustrated in these figures, the microwave irradiation device 1 includes a conveyance device 60 that conveys an irradiated object 90 that is a heat target object and is irradiated with microwaves. The conveyance device 60 includes, for example, a belt 61 and a roller 62. The belt 61 is hung on the roller 62. The roller 62 is rotated by a motor (not illustrated) to move the belt 61 in the longitudinal axis direction. The irradiated object 90 is placed on the belt 61 and conveyed in a conveyance direction 91 by the movement of the belt 61. A supply device 84 for sequentially supplying the irradiated object 90 onto the belt 61 is provided at an upstream in the conveyance direction 91 of the conveyance device 60. A carry-out device 86 that carries out, from the belt 61, the irradiated object 90 having been conveyed is provided at a downstream in the conveyance direction 91 of the conveyance device 60.

The microwave irradiation device 1 includes an antenna group 30 having a plurality of antennas 40 configured to irradiate the irradiated object 90 to be conveyed by the conveyance device 60 with microwaves. The plurality of antennas 40 are arranged along the conveyance direction 91. Each of the antennas 40 is, for example, a directional antenna such as a loop antenna or a patch antenna. That is, each of the antennas 40 has an irradiation surface 42, and is configured to emit microwaves from an irradiation source 44 in the irradiation surface 42 in the direction of a directional irradiation axis 45. The direction of the directional irradiation axis 45 of each of the antennas 40 is directed to the irradiated object 90 to be conveyed by the conveyance device 60. Each of the antennas 40 is fed from an oscillator 10 conducted through a power feeder 20 such as a coaxial cable.

The periphery of the antenna group 30 is covered with metal for shielding of microwaves. That is, the conveyance device 60 is provided so as to pass through a metal housing 82 or in the metal housing 82, and the antenna group 30 is arranged in the metal housing 82.

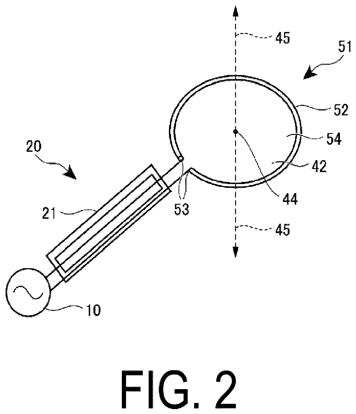

The antenna 40 will be described using a loop antenna as an example. FIG. 2 is a schematic view illustrating an outline of a configuration example of a loop antenna 51. The loop antenna 51 includes a conductive wire 52 formed in an annular shape and having a length equivalent of, for example, one wavelength of the microwave to be irradiated. Both ends of the conductive wire 52 are power feed points 53. For example, a coaxial cable 21 as the power feeder 20 is connected to the power feed point 53. The coaxial cable 21 connects and conducts the oscillator 10 and the loop antenna 51. The oscillator 10 supplies high-frequency power to the loop antenna 51 through the coaxial cable 21. When power is fed, a current is generated in the conductive wire 52 as an element, and the loop antenna 51 emits a radio wave to form an electric field.

In the loop antenna 51 having an annular shape, an opening surface 54 formed by the conductive wire 52 serves as the irradiation surface 42, and the center of the opening surface 54 serves as the irradiation source 44. The directional irradiation axis 45 is formed in a direction through the irradiation source 44 and perpendicular to the opening surface 54, and microwaves are emitted in both directions along the directional irradiation axis 45. Note that the shape formed by the conductive wire 52 is not limited to an annular shape, and may be a loop of another shape such as a quadrangle.

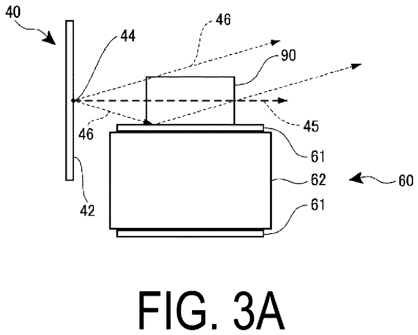

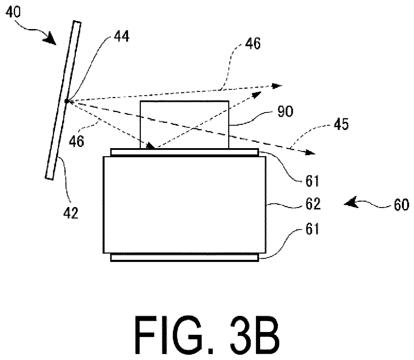

The orientation of the antenna 40 will be further described. FIGS. 3A and 3B are schematic views for explaining the orientation of the antenna 40. In the present embodiment, for example, as illustrated in FIG. 3A, the antenna 40 is arranged such that the directional irradiation axis 45 is parallel to the surface of the belt 61 of the conveyance device 60 on which the irradiated object 90 is placed. Alternatively, as illustrated at least in FIG. 3B, the antenna 40 is arranged such that the directional irradiation axis 45 does not intersect a structure that reflects microwaves among structures constituting the conveyance device 60.

Although the microwaves emitted from the directional antenna 40 spread to some extent as indicated by a diffusion irradiation axis 46 in FIGS. 3A and 3B, the irradiation angle thereof is relatively narrow, and an electric field having the strongest intensity along the directional irradiation axis 45 is formed. Since the directional irradiation axis 45 does not intersect a structure that reflects microwaves, a strong reflection wave is not generated. As a result, a standing wave that can be generated by interference between the incident wave and the reflection wave is not generated. If a standing wave is generated by interference between a strong incident wave and a reflection wave, the electric field intensity is largely different between the position of antinodes and the position of nodes of the standing wave in particular, and uneven heating can occur in the irradiated object 90. In the microwave irradiation device 1 of the present embodiment, since such standing wave is not generated, uneven heating is prevented from occurring in the irradiated object 90.

Note that the structure that reflects microwaves described above means a structure that reflects microwaves to such extent as to generate standing waves that cause the uneven heating described above.

### Operation

The operation of the microwave irradiation device 1 of the present embodiment will be described. The oscillator 10 outputs high-frequency power according to the frequency of the microwave. The frequency is, though not limited to, 2.45 GHz, 915 MHz, or 450 MHz, for example. The high-frequency power output from this oscillator 10 is supplied to the antenna 40 through the power feeder 20. The antenna 40 emits microwaves in the direction of the directional irradiation axis 45 based on this power feed.

The conveyance device 60 rotates the belt 61 by the rotation of the roller 62. The supply device 84 supplies the irradiated object 90 onto the belt 61 of the conveyance device 60, for example, at regular intervals. The conveyance device 60 conveys the supplied irradiated object 90 in the conveyance direction 91 and causes the supplied irradiated object 90 to pass in front of the plurality of antennas 40 in the metal housing 82. The irradiated object 90 passing in front of the antenna 40 is irradiated with microwaves from the antenna 40. By the microwaves, the irradiated object 90 is dielectrically heated. The heated irradiated object 90 is conveyed to the outside of the metal housing 82 by the conveyance device 60. The carry-out device 86 carries out the heated irradiated object 90 from the conveyance device 60.

As described above, in the present embodiment, the directional antenna 40 is used for the antenna group 30, and the directional irradiation axis 45 is designed not to intersect the structure that reflects the microwave of the conveyance device 60. For this reason, a standing wave derived from the reflection wave is not generated in the microwave to be irradiated. As a result, the irradiated object 90 is uniformly heated.

As a heating device by dielectric heating, for example, a multimode heating device that reflects microwaves in a metal housing to heat a heated object is known. There is also known a single-mode heating device in which a heated object is arranged in a waveguide that conveys microwaves. With such device, reflection of microwaves is intentionally used. That is, a standing wave due to reflection is intentionally created, and dielectric heating is performed by this standing wave. However, in such standing wave, a difference in electric field intensity occurs depending on the location as is remarkable between the antinode position and the node position. This unevenness in electric field intensity causes uneven heating of the heated object. Since the microwave irradiation device 1 of the present embodiment is adjusted so as not to generate a standing wave, uniform heating can be achieved.

A heating device using a waveguide tends to increase in size, such as an increase in size of the waveguide particularly when the frequency is low. When a plurality of types of heating devices are combined for uniform heating, the entire device tends to increase in size. On the other hand, in the microwave irradiation device 1 of the present embodiment, no waveguide is used, and there is no need for a plurality of types of devices to be combined, thus making it easy to downsize the device. Since no waveguide is used, it is easy to use a microwave having a relatively low frequency. By lowering the frequency, it is possible to lower the half power depth.

Note that in the above-described embodiment, the case where the irradiated object 90 is held on the belt 61 of the conveyance device 60 at the time of irradiation with microwaves has been described as an example, but the present invention is not limited to this example. The irradiated object 90 may be configured to be held on a stopped holding table. Also in this case, the antenna 40 is preferably provided such that the directional irradiation axis 45 does not intersect the structure constituting the holding table. Also in this case, generation of a standing wave due to a reflection wave is suppressed, and uneven heating due to dielectric heating is suppressed.

The microwave irradiation device 1 according to the present embodiment can be incorporated in processing devices for various uses or configured in an appropriate form. For example, in a case of being used for heat sterilization of a hermetically packaged food, the microwave irradiation device 1 is incorporated in a device configured to pressurize the irradiated object 90 that is a hermetically packaged food or to keep the irradiated object warm for a time required for sterilization. Alternatively, in order to be used for a material reaction treatment or the like, the irradiated object 90, which is a treatment target object, may be accommodated in an appropriate reaction container, or the conveyance device 60 may be configured as a tube or the like through which the treatment target object flows.

### Second Embodiment

The second embodiment will be described. Here, differences from the first embodiment will be described, and the same parts will be denoted by the same reference signs, and the description thereof will be omitted.

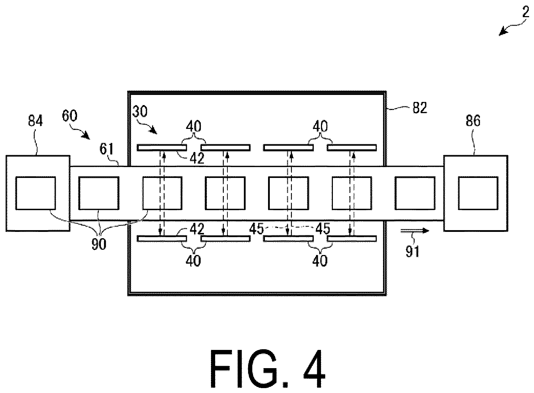

FIG. 4 is a plan view schematically illustrating an outline of a configuration example of a microwave irradiation device 2 of the second embodiment. In this figure, illustration of the oscillator 10, the power feeder 20, and the like is omitted. In the microwave irradiation device 1 of the first embodiment illustrated in FIG. 1B, the antenna 40 is arranged on one side of the conveyance device 60, whereas in the microwave irradiation device 2 of the second embodiment illustrated in FIG. 4, the antennas 40 are arranged on both sides of the conveyance device 60. Thus, in the microwave irradiation device 1 of the first embodiment illustrated in FIG. 1B, the irradiated object 90 is irradiated with microwaves from one side, whereas in the microwave irradiation device 2 of the second embodiment illustrated in FIG. 4, the irradiated object 90 is irradiated with microwaves from both sides. In particular, in the microwave irradiation device 2 of the second embodiment, the antennas 40 are provided to face each other across the conveyance device 60, and the directional irradiation axes 45 of the antennas 40 facing each other overlap each other.

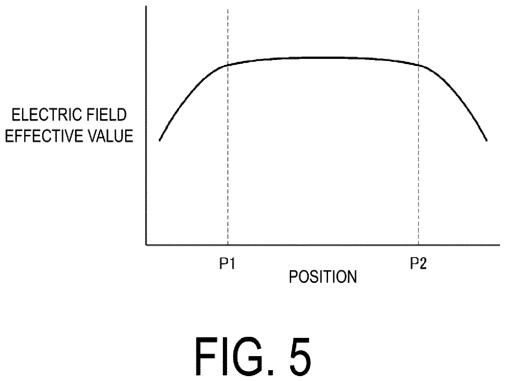

FIG. 5 is a schematic view illustrating the magnitude of the electric field effective value depending on the position along the directional irradiation axis 45 of the antennas 40 provided to face each other. Each of the antennas 40 facing each other are arranged at a first position P1 and a second position P2. Thus, the conveyance device 60 passes through between the first position P1 and the second position P2, and the irradiated object 90 passes therethrough. As illustrated in FIG. 5, the microwave irradiation device 2 of the present embodiment is configured such that an electric field effective value becomes substantially constant between the first position P1 and the second position P2.

According to the present embodiment, since the microwave is irradiated from both sides in the direction crossing the conveyance direction 91, even if the size of the irradiated object 90 in the direction crossing the conveyance direction 91 is large to some extent, the irradiated object is heated from both sides, and uniform heating can be achieved. Since such effect can be obtained as long as the irradiated object 90 is irradiated with microwaves from both sides, the antenna 40 and the antenna 40 need not necessarily face each other.

In the present embodiment, the antenna 40 and the antenna 40 face each other, and the microwave irradiation device 2 is configured such that the electric field intensity by the microwave becomes substantially constant in the direction crossing the conveyance direction 91. Such configuration can perform heating of the irradiated object 90 more uniformly. The electric field intensity between the antenna 40 and the antenna 40 facing each other being constant means the electric field intensity being constant to such extent as to satisfy a requirement regarding uniformity of heating of the irradiated object 90. According to the present embodiment, heating of the irradiated object 90 can be performed more uniformly.

### Modification of Heating Method

An example has been described above in which, using the microwave irradiation device 2 of the present embodiment, the irradiated object 90 is uniformly irradiated with microwaves from both sides by the two antennas 40 facing each other to heat the irradiated object 90, but the heating method is not limited to this.

Through an experiment, it has been found that when the antennas 40 arranged on both sides of the irradiated object 90 are simultaneously used to uniformly irradiate both sides of the irradiated object 90 with microwaves, particularly a center part of the irradiated object 90 may be heated, and when one side of the irradiated object 90 is non-uniformly irradiated with microwaves, particularly an outer peripheral part of the irradiated object 90 may be heated. Thus, by combining uniform irradiation from both sides and non-uniform irradiation from one side, each of the center part and the outer peripheral part of the irradiated object 90 may be heated, and the entire irradiated object 90 may be uniformly heated, or may be intentionally non-uniformly heated.

For example, uniform microwave irradiation may be performed as the first irradiation, and non-uniform microwave irradiation may be performed as the second irradiation and the third irradiation. That is, the following irradiation can be performed in a state where the irradiated object 90 is at a position equidistant from the two antennas 40 between the pair of antennas 40. In the first irradiation, the irradiated object 90 can be irradiated with the microwave having equal irradiation intensity from the two antennas 40. In the second irradiation, the irradiated object 90 can be irradiated with the microwave from one of the antennas 40. In the third irradiation, the irradiated object 90 can be irradiated with the microwave from the other of the antennas 40. The irradiated object 90 can be uniformly heated by the combination of the first irradiation, the second irradiation, and the third irradiation. Alternatively, only the first irradiation and the second irradiation may be performed.

The first irradiation, the second irradiation, and the third irradiation may be performed by the same pair of antennas 40 as described above, or may be performed by a plurality of pairs of antennas 40. In a case where the irradiation is performed by the plurality of pairs of antennas 40, for example, in the plurality of pairs of antennas 40 arranged side by side on both sides of the conveyance device 60, microwaves with equal irradiation intensity can be emitted from the two antennas 40 facing each other in a part, microwaves can be emitted from one of the antennas 40 in a part, and microwaves can be emitted from the other of the antennas 40 in a part. In this case, the first irradiation, the second irradiation, and the third irradiation can be performed due to the conveyance device 60 conveying the irradiated object 90 between these antennas 40. In this case, the part where the first irradiation is performed may be provided with the pair of antennas 40 facing each other, whereas the part where the second irradiation and the third irradiation are performed may be provided with the antennas 40 only on one side as in the microwave irradiation device 1 of the first embodiment.

Furthermore, in the second irradiation and the third irradiation, it is sufficient to perform non-uniform microwave irradiation, and thus the irradiation intensity may be different between one and the other of the pair of antennas 40 facing each other. Alternatively, between the pair of antennas 40 having equal or unequal irradiation intensities, the irradiated object 90 may be brought close to one or to the other.

In order to change the distance between the irradiated object 90 and the antenna 40, the conveyance device 60 may be configured to move the irradiated object 90 also in a direction orthogonal to the conveyance direction. Alternatively, the conveyance device 60 and the antenna 40 may be arranged such that the distance between the conveyance device 60 and the antenna 40 is different for each of the antennas 40.

The modification of the heating method described here may be performed using an irradiation device different from the microwave irradiation device 2 of the second embodiment. For example, the antenna needs not be arranged along the conveyance device. For example, the irradiation device may have only antennas facing each other and no conveyance device may be provided. The conveyance device may also be configured to move the irradiated object between two antennas facing each other.

### Third Embodiment

The third embodiment will be described. Here, differences from the first embodiment will be described, and the same parts will be denoted by the same reference signs, and the description thereof will be omitted.

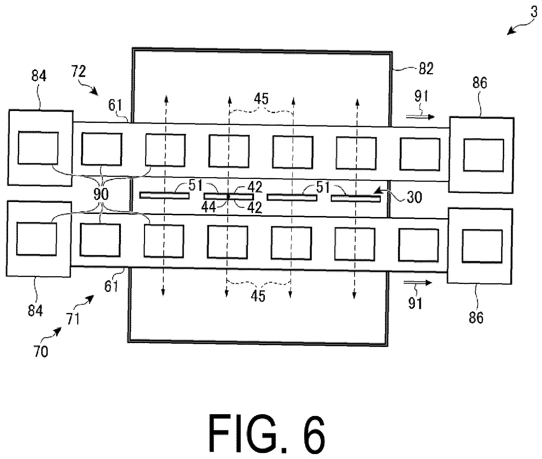

FIG. 6 is a plan view schematically illustrating an outline of a configuration example of a microwave irradiation device 3 of the third embodiment. In this figure, illustration of the oscillator 10, the power feeder 20, and the like is omitted. In the microwave irradiation device 3 of the present embodiment, the loop antenna 51 is used as the antenna 40 constituting the antenna group 30. As described above, in the loop antenna 51, both front and back sides of the opening surface 54 serve as the irradiation surface 42, and microwaves are emitted in both directions along the directional irradiation axis 45. In the microwave irradiation device 3 of the third embodiment, both sides of a plurality of the loop antennas 51 arranged side by side are provided respectively with a first conveyance device 71 and a second conveyance device 72 corresponding to the conveyance device 60 of the first embodiment, and a conveyance device group 70 is formed.

According to the present embodiment, the microwave emitted from one loop antenna 51 to both sides irradiates the irradiated object 90 conveyed by the first conveyance device 71 and the irradiated object 90 conveyed by the second conveyance device 72, respectively, and thus the energy efficiency of the microwave irradiation device 3 is good even with a simple configuration.

Also in the present embodiment, similarly to the second embodiment, the antennas may be provided on both sides of the conveyance device. The loop antennas 51 may be provided on both sides of the conveyance device, and a large number of conveyance devices may be arranged side by side in parallel.

### Fourth Embodiment

The fourth embodiment will be described with reference to the drawings. The present embodiment relates to a microwave irradiation device. The microwave irradiation device of the present embodiment is configured to irradiate an irradiated object with microwaves so as to internally heat the irradiated object. The irradiated object is, though not limited to, a food, for example.

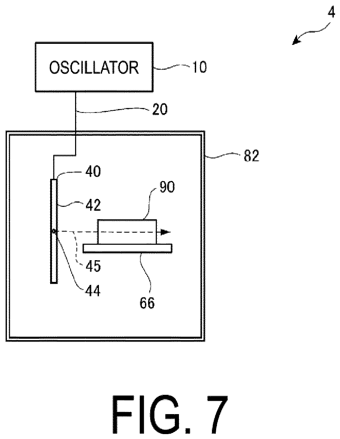

FIG. 7 is a view schematically illustrating an outline of a configuration example of a microwave irradiation device 4 according to the present embodiment. As illustrated in this figure, the microwave irradiation device 4 includes a holder 66 that holds the irradiated object 90 that is a heat target object and is irradiated with microwaves. The holder 66 can be a table on which, for example, the irradiated object 90 is held. The microwave irradiation device 4 includes the antenna 40 configured to irradiate the irradiated object 90 held by the holder 66 with microwaves. The antenna 40 is a directional antenna such as, for example, a loop antenna or a patch antenna. That is, the antenna 40 has the irradiation surface 42, and is configured to emit microwaves from the irradiation source 44 in the irradiation surface 42 in the direction of the directional irradiation axis 45. The direction of the directional irradiation axis 45 of the antenna 40 is along the holding surface of the holder 66. The antenna 40 is fed from the oscillator 10 conducted through the power feeder 20 such as a coaxial cable. The periphery of the antenna 40 is covered with metal for shielding of microwaves. That is, the holder 66 and the antenna 40 are arranged in the metal housing 82.

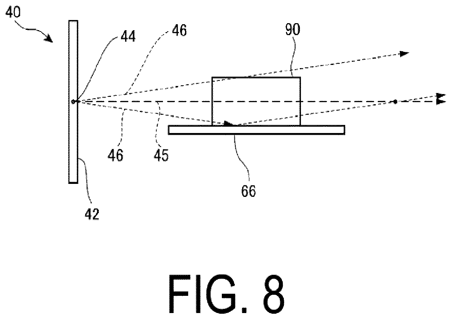

The orientation of the antenna 40 will be described. FIG. 8 is a schematic view for explaining the orientation of the antenna 40. In the present embodiment, for example, as illustrated in FIG. 8, the antenna 40 is arranged such that the directional irradiation axis 45 becomes parallel to the surface of the holder 66 on which the irradiated object 90 is placed. Alternatively, the antenna 40 is arranged such that at least the directional irradiation axis 45 does not intersect a structure that reflects microwaves among structures constituting the holder 66.

Although the microwaves emitted from the directional antenna 40 spread to some extent as indicated by the diffusion irradiation axis 46 in FIG. 8, the irradiation angle thereof is relatively narrow, and an electric field having the strongest intensity along the directional irradiation axis 45 is formed. Since the directional irradiation axis 45 does not intersect a structure that reflects microwaves, a strong reflection wave is not generated. As a result, a standing wave that can be generated by interference between the incident wave and the reflection wave is not generated.

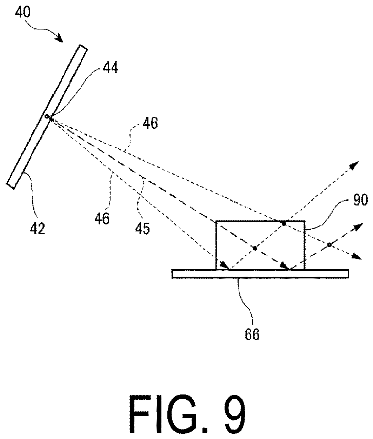

FIG. 9 is a schematic view illustrating a comparative example. As illustrated in FIG. 9, when the directional irradiation axis 45 intersects with the surface of the holder 66, the microwave is reflected by the surface of the holder 66. As a result of generation of a strong reflection wave, the incident wave and the reflection wave interfere with each other, and a standing wave is generated. When the standing wave is generated, the electric field intensity is largely different between the position of antinodes and the position of nodes of the standing wave in particular, and uneven heating can occur in the irradiated object 90.

In the microwave irradiation device 4 of the present embodiment, as described with reference to FIG. 8, since a standing wave due to interference between the incident wave and the reflection wave is not generated, uneven heating is prevented from occurring in the irradiated object 90. Note that the structure that reflects microwaves described above means a structure that reflects microwaves to such extent as to generate standing waves that cause the uneven heating described above.

The operation of the microwave irradiation device 4 of the present embodiment will be described. The oscillator 10 outputs high-frequency power according to the frequency of the microwave. The frequency is, though not limited to, 2.45 GHz, 915 MHz, or 450 MHz, for example. The high-frequency power output from this oscillator 10 is supplied to the antenna 40 through the power feeder 20. The antenna 40 emits microwaves in the direction of the directional irradiation axis 45 based on this power feed. The irradiated object 90 arranged on the holder 66 in front of the antenna 40 is irradiated with microwaves from the antenna 40. By the microwaves, the irradiated object 90 is dielectrically heated.

As described above, in the present embodiment, the directional antenna 40 is used as an antenna that emits microwaves, and the directional irradiation axis 45 is designed not to intersect the structure that reflects the microwave of the holder 66. For this reason, a standing wave derived from the reflection wave is not generated in the microwave to be irradiated. As a result, the irradiated object 90 is uniformly heated.

As a heating device by dielectric heating, for example, a multimode heating device that reflects microwaves in a metal housing to heat a heated object is known. There is also known a single-mode heating device in which a heated object is arranged in a waveguide that conveys microwaves. With such device, reflection of microwaves is intentionally used. That is, a standing wave due to reflection is intentionally created, and dielectric heating is performed by this standing wave. However, in such standing wave, a difference in electric field intensity occurs depending on the location as is remarkable between the antinode position and the node position. This unevenness in electric field intensity causes uneven heating of the heated object. Since the microwave irradiation device 4 of the present embodiment is adjusted not to generate a standing wave, uniform heating can be achieved.

A heating device using a waveguide tends to increase in size, such as an increase in size of the waveguide particularly when the frequency is low. When a plurality of types of heating devices are combined for uniform heating, the entire device tends to increase in size. On the other hand, in the microwave irradiation device 4 of the present embodiment, no waveguide is used, there is no need for a plurality of types of devices to be combined, thus making it easy to downsize the device. Since no waveguide is used, it is easy to use a microwave having a relatively low frequency. By lowering the frequency, it is possible to lower the half power depth.

For more uniform heating, the holder 66 may move back and forth along the directional irradiation axis 45 of the antenna 40 or rotate in a plane parallel to the directional irradiation axis 45. By moving the irradiated object 90 in such direction, the irradiated object 90 can be more uniformly heated. The same may be performed by moving not the holder 66 but the antenna 40.

### Fifth Embodiment

The fifth embodiment will be described. Here, differences from the fourth embodiment will be described, and the same parts will be denoted by the same reference signs, and the description thereof will be omitted. The microwave irradiation device of the present embodiment is configured to irradiate an irradiated object, such as food, with microwaves to internally heat the irradiated object. The microwave irradiation device includes a conveyance device, and a plurality of objects to be irradiated are conveyed sequentially and heated sequentially.

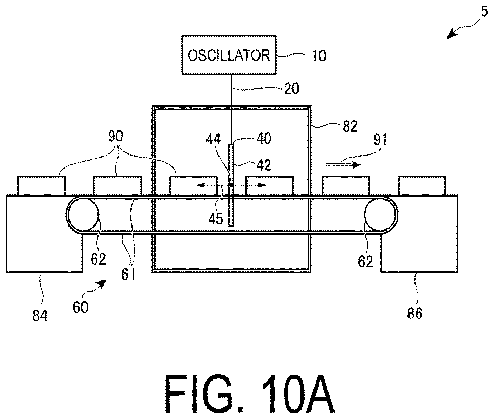

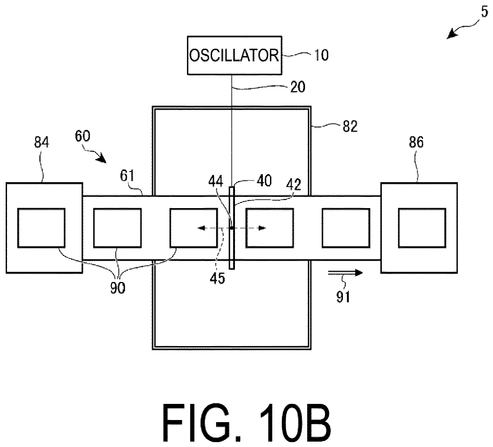

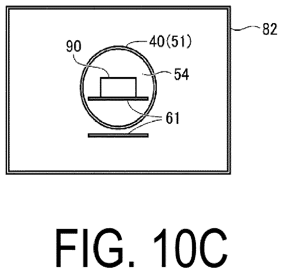

FIG. 10A is a front view schematically illustrating an outline of a configuration example of a microwave irradiation device 5 according to the second present embodiment. FIG. 10B is a plan view schematically illustrating an outline of a configuration example of the microwave irradiation device 5 according to the second present embodiment. FIG. 10C is a view schematically illustrating an outline of a configuration example of an end surface viewed from a side at a position of the antenna 40 of the microwave irradiation device 5 according to the second present embodiment.

As illustrated in these figures, the microwave irradiation device 5 includes the conveyance device 60 as a holder that conveys the irradiated object 90 that is a heat target object and irradiated with microwaves. The conveyance device 60 includes, for example, a belt 61 and a roller 62. The belt 61 is hung on the roller 62. The roller 62 is rotated by a motor (not illustrated) to move the belt 61 in the longitudinal axis direction. The irradiated object 90 is placed on the belt 61 and conveyed in a conveyance direction 91 by the movement of the belt 61. A supply device 84 for sequentially supplying the irradiated object 90 onto the belt 61 is provided at an upstream in the conveyance direction 91 of the conveyance device 60. A carry-out device 86 that carries out, from the belt 61, the irradiated object 90 having been conveyed is provided at a downstream in the conveyance direction 91 of the conveyance device 60.

The microwave irradiation device 5 includes the antenna 40 configured to irradiate the irradiated object 90 conveyed by the conveyance device 60 with microwaves. The antenna 40 is, for example, a loop antenna that is a type of directional antenna. The loop antenna is as described with reference to FIG. 2. The antenna 40 is fed from the oscillator 10 conducted through the power feeder 20 such as a coaxial cable.

Referring back to FIGS. 10A to 10C, the description will be continued. In the microwave irradiation device 5 of the present embodiment, the belt 61 of the conveyance device 60 is provided so as to penetrate the irradiation surface 42. The irradiation surface 42 is the opening surface 54 of the antenna 40 which is the loop antenna 51. That is, the irradiated object 90 is conveyed in the conveyance direction 91 so as to pass through the antenna 40. For example, the irradiation surface 42 of the antenna 40 is perpendicular to the conveyance direction 91, and the directional irradiation axis 45 of the antenna 40 is parallel to the conveyance direction 91.

The periphery of the antenna 40 is covered with metal for shielding of microwaves. That is, the conveyance device 60 is provided so as to pass through the metal housing 82, and the antenna 40 is arranged in the metal housing 82.

Also in the microwave irradiation device 5 of the present embodiment, the directional irradiation axis 45 of the antenna 40 does not intersect a structure that reflects microwaves among the structures constituting the conveyance device 60. As a result, a standing wave that can be generated by interference between the incident wave and the reflection wave is not generated. Also in the microwave irradiation device 5 of the present embodiment, since such standing wave is not generated, uneven heating is prevented from occurring in the irradiated object 90.

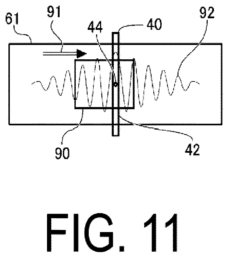

Furthermore, in the microwave irradiation device 5 of the present embodiment, the irradiated object 90 passes through the irradiation source 44 of the antenna 40, thereby achieving efficient and uniform heating of the irradiated object 90. FIG. 11 schematically illustrates the electric field intensity depending on the location with the amplitude of a wavy line 92. As illustrated in this figure, in the microwave irradiation device 5 of the present embodiment, the center part of the irradiated object 90 passes through the irradiation source 44 of the antenna 40 having high electric field intensity. Therefore, the irradiated object 90 generates heat at its center part, and is efficiently heated from the inside of the irradiated object 90. That is, it is not necessary to consider the half power depth unlike when the microwave is emitted from the outside of the irradiated object 90. Since the irradiated object 90 placed on the belt 61 of the conveyance device 60 moves in the conveyance direction 91, the heat generation position changes in the irradiated object 90 and is uniformly heated.

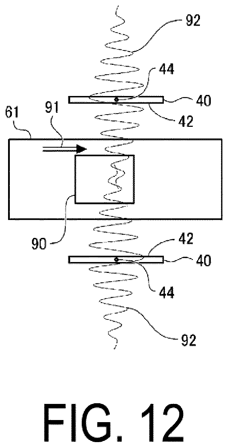

A comparative example is illustrated in FIG. 12. FIG. 12 schematically illustrates a heating device in which the antenna 40 is arranged laterally with respect to the conveyance direction 91 of the conveyance device 60 generally known. As the electric field intensity is schematically indicated by the wavy line 92, in the arrangement as illustrated in FIG. 12, the irradiated object 90 is away from the irradiation source 44 of the antenna 40, and the power hardly reaches the center part of the irradiated object 90. Thus, the center part may be difficult to heat. On the other hand, in the microwave irradiation device 5 of the present embodiment, the electric field intensity increases at the center part of the irradiated object 90.

The operation of the microwave irradiation device 5 of the present embodiment will be described. The oscillator 10 outputs high-frequency power according to the frequency of the microwave. The frequency is, though not limited to, 2.45 GHz, 915 MHz, or 450 MHz, for example. The high-frequency power output from this oscillator 10 is supplied to the antenna 40 through the power feeder 20. The antenna 40 emits microwaves in the direction of the directional irradiation axis 45 based on this power feed.

The conveyance device 60 rotates the belt 61 by the rotation of the roller 62. The supply device 84 supplies the irradiated object 90 onto the belt 61 of the conveyance device 60, for example, at regular intervals. The conveyance device 60 conveys the supplied irradiated object 90 in the conveyance direction 91 and causes the supplied irradiated object 90 to pass through the opening surface 54 of the antenna 40, which is the loop antenna 51 in the metal housing 82. The irradiated object 90 passing through the opening surface 54 of the antenna 40 is irradiated with microwaves from the antenna 40. By the microwaves, the irradiated object 90 is dielectrically heated. The heated irradiated object 90 is conveyed to the outside of the metal housing 82 by the conveyance device 60. The carry-out device 86 carries out the heated irradiated object 90 from the conveyance device 60.

As described above, in the present embodiment, the directional antenna 40 is used, and the directional irradiation axis 45 is designed so as not to intersect the structure that reflects the microwave of the conveyance device 60. For this reason, a standing wave derived from the reflection wave is not generated in the microwave to be irradiated. As a result, the irradiated object 90 is uniformly heated. The irradiated object 90 passes through the irradiation source 44 of the antenna 40. For this reason, a strong electric field is generated inside the irradiated object 90, and the irradiated object 90 is efficiently heated from the inside. In addition, effects similar to those of the fourth embodiment can be obtained.

The microwave irradiation device 5 according to the present embodiment can be incorporated in processing devices for various uses or configured in an appropriate form. For example, in a case of being used for heat sterilization of a hermetically packaged food, the microwave irradiation device 4 is incorporated in a device configured to pressurize the irradiated object 90 that is a hermetically packaged food or to keep the irradiated object warm for a time required for sterilization. Alternatively, in order to be used for a material reaction treatment or the like, the irradiated object 90, which is a treatment target object, may be accommodated in an appropriate reaction container, or the conveyance device 60 may be configured as a tube or the like through which the treatment target object flows.

### Sixth Embodiment

The sixth embodiment will be described. Here, differences from the fourth embodiment will be described, and the same parts will be denoted by the same reference signs, and the description thereof will be omitted.

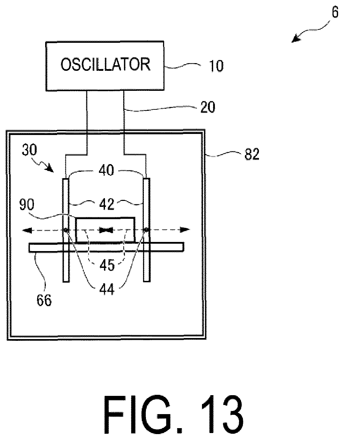

FIG. 13 is a view schematically illustrating an outline of a configuration example of a microwave irradiation device 6 according to the sixth embodiment. As illustrated in this figure, the microwave irradiation device 6 includes the antenna group 30 including the two antennas 40. The antenna 40 is a directional antenna such as, for example, a loop antenna or a patch antenna. Although not limited to this, it is assumed here that the antenna 40 is the loop antenna 51. The two antennas 40 of the antenna group 30 are arranged in parallel such that the irradiation surfaces 42 face each other. The holder 66 that holds the irradiated object 90 is provided so as to penetrate the opening surface 54 forming this irradiation surface 42. Thus, the irradiated object 90 held by the holder 66 is sandwiched between the two antennas 40. The directional irradiation axes 45 of the two antennas 40 are parallel to the surface of the holder 66 on which the irradiated object 90 is held so as not to generate strong reflection waves. The two antennas 40 are configured to irradiate the irradiated object 90 with microwaves from opposite sides. The microwaves emitted from the respective antennas 40 overlap each other.

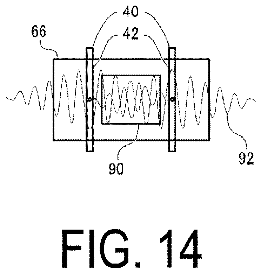

FIG. 14 schematically illustrates the electric field intensity depending on the location with the amplitude of the wavy line 92. As illustrated in this figure, the microwave irradiation device 6 of the present embodiment irradiates the irradiated object 90 with microwaves from both sides.

A schematic view illustrating the magnitude of the electric field effective value depending on the position along the directional irradiation axis 45 of the antennas 40 provided to face each other is as FIG. 5 described above. Each of the antennas 40 facing each other are arranged at a first position P1 and a second position P2. Thus, the irradiated object 90 is arranged between the first position P1 and the second position P2. As illustrated in FIG. 5, the microwave irradiation device 4 of the present embodiment is configured such that an electric field effective value becomes substantially constant between the first position P1 and the second position P2.

According to the present embodiment, since the irradiated object 90 is irradiated with microwaves from both sides, and the electric field intensity formed by the microwaves is substantially equal at even different positions, uniform heating of the irradiated object 90 can be achieved. The electric field intensity between the antenna 40 and the antenna 40 facing each other being constant means the electric field intensity being constant to such extent as to satisfy a requirement regarding uniformity of heating of the irradiated object 90. According to the present embodiment, heating of the irradiated object 90 can be performed more uniformly. In addition, effects similar to those of the microwave irradiation device 4 of the fourth embodiment can be obtained.

Here, the case where the directional irradiation axes 45 of the two antennas 40 are parallel to the surface of the holder 66, on which the irradiated object 90 is placed, so as not to generate strong reflection waves has been described as an example. The directional irradiation axis 45 is preferably parallel to the placement surface of the holder 66, but is not limited to this. However, it is preferable that the two antennas 40 are arranged such that at least the directional irradiation axes 45 do not intersect a structure that reflects microwaves and constitutes the holder 66 provided between the opening surfaces 54 and 54 facing each other of the two antennas 40. In this way, a standing wave derived from the reflection wave is not generated in the microwave to be irradiated, and as a result, the irradiated object 90 is uniformly heated.

### Seventh Embodiment

The seventh embodiment will be described. Here, differences from the fifth embodiment will be described, and the same parts will be denoted by the same reference signs, and the description thereof will be omitted.

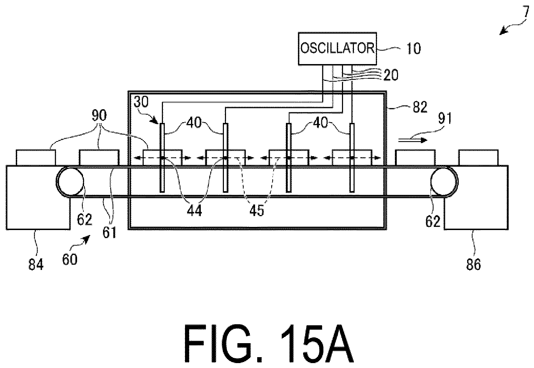

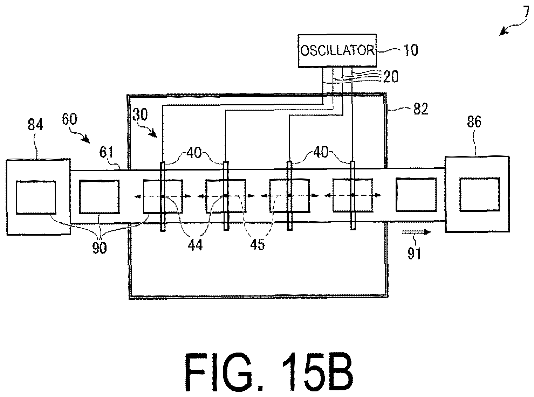

FIG. 15A is a front view schematically illustrating an outline of a configuration example of a microwave irradiation device 7 according to the seventh embodiment, and FIG. 15B is a plan view schematically illustrating an outline of a configuration example of the microwave irradiation device 7 according to the seventh embodiment. As illustrated in these figures, the microwave irradiation device 7 according to the seventh embodiment includes the conveyance device 60 that conveys the irradiated object 90 that is a heat target object and is irradiated with microwaves, similarly to microwave irradiation device 5 according to the fifth embodiment.

The microwave irradiation device 7 of the seventh embodiment includes the antenna group 30 having the plurality of antennas 40 configured to irradiate the irradiated object 90 conveyed by the conveyance device 60 with microwaves. The plurality of antennas 40 are arranged along the conveyance direction 91. Each of the antennas 40 is, for example, the loop antenna 51. The belt 61 of the conveyance device 60 is arranged to pass through each of the antennas 40. Each of the antennas 40 is fed from the oscillator 10 conducted through the power feeder 20 such as a coaxial cable. The plurality of antennas 40 are arranged such that the electric field effective value becomes substantially constant between the adjacent antennas 40 and 40, similarly to the antenna 40 of the microwave irradiation device 6 of the sixth embodiment. The periphery of the antenna group 30 is covered with the metal housing 82 for shielding of microwaves.

According to the microwave irradiation device 7 of the seventh embodiment, the plurality of antennas 40 make the electric field intensity by the microwave substantially constant along the belt 61. The irradiated object 90 conveyed by the conveyance device 60 moves in the electric field having this constant intensity. The irradiated object 90 is configured to pass through the irradiation source 44 of each of the antennas 40. Due to these, the microwave irradiation device 7 can efficiently and uniformly heat the irradiated object 90. In addition, effects similar to those of the microwave irradiation devices of the first to sixth embodiments can be obtained.

### Eighth Embodiment

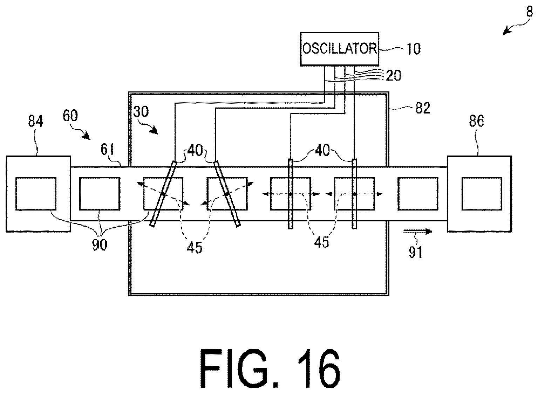

The eighth embodiment will be described. Here, differences from the seventh embodiment will be described, and the same parts will be denoted by the same reference signs, and the description thereof will be omitted. FIG. 16 is a plan view schematically illustrating an outline of a configuration example of a microwave irradiation device 8 according to the eighth embodiment. As illustrated in this figure, the microwave irradiation device 8 according to the eighth embodiment is similar to the microwave irradiation device 7 according to the seventh embodiment, but differs from the microwave irradiation device 7 according to the seventh embodiment in that the orientations of some of the antennas 40 are changed, and the directional irradiation axes 45 of the antennas 40 are not along the conveyance direction 91.

In heating of the irradiated object 90, it is not necessarily preferable that power is uniformly supplied. For example, when the irradiated object 90 has a region that is likely to be heated and a region that is less likely to be heated, more power is supplied to the region that is less likely to be heated, whereby the entire irradiated object 90 is uniformly heated.

The example illustrated in FIG. 16 is an example in which the lower side and the upper side of the irradiated object 90 in the figure are the regions that are less likely to be heated. The antennas 40 are arranged such that one of the directional irradiation axes 45, which is facing each other, of the antennas 40 on the supply device 84 side is biased on the lower side of the figure with respect to the conveyance direction 91, and the other is biased on the upper side in the figure, whereby the electric fields are formed toward the lower side and the upper side in the figure, respectively, and power is applied from different directions with respect to the irradiated object 90 passing therethrough. As a result, the entire irradiated object 90 is uniformly heated. In addition, effects similar to those of the microwave irradiation device 7 of the seventh embodiment can be obtained.

### Experiment Example 1

The uniformity of heating by the microwave irradiation device according to the above-described embodiment was evaluated with potato salad packed in a container as a heat target object.

### Method

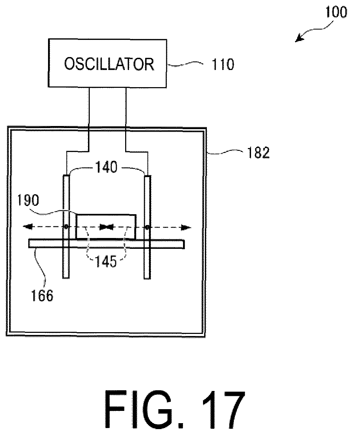

For the evaluation, a test device having the similar configuration to that of the microwave irradiation device 6 according to the sixth embodiment described with reference to FIG. 13 was used. FIG. 17 illustrates an outline of a configuration example of this test device 100. The test device 100 includes an oscillator 110, and two loop antennas 140 and a food holding table 166 arranged in a metal housing 182.

The oscillation frequency of the oscillator 110 was 450 MHz. As the loop antenna 140, a square loop antenna made of an aluminum material and having a circumferential length corresponding to one wavelength (λ = 666 mm) was used. The two loop antennas 140 were arranged such that their opening surfaces faced each other and the directional irradiation axis 145 became parallel to the food holding table 166. The interval between the two loop antennas 140 was λ/4 = 166.5 mm. Power feed to the loop antenna 140 was in-phase power feed. A plate made of polyethylene (PE) having a thickness of 5 mm was used for the food holding table 166. The food holding table 166 was arranged so as to penetrate the two loop antennas 140.

A heat target object 190 was 150 g of potato salad served on a polypropylene (PP) material tray having a length of 115 mm, a width of 80 mm, and a depth of 20 mm. The heat target object 190 was arranged centrally between the two loop antennas 140 on the food holding table 166. The heat target object 190 was arranged in two ways, that is, arranged such that the length direction of the tray became perpendicular to the directional irradiation axis 145 (vertical placement) and arranged such that the length direction of the tray became parallel to the directional irradiation axis 145 (horizontal placement). The temperature measurement was performed by attaching a plurality of thermolabels (manufactured by NiGK Corporation) to the surface of the potato salad. The temperature measurement was performed after heating at an output of 150 W for 5 minutes.

Numerical analysis of the electric field intensity formed between the two loop antennas 140 was performed.

### Results

As a result of the numerical simulation of the electric field intensity, a uniform electric field as illustrated in FIG. 5 was obtained between the two loop antennas 140.

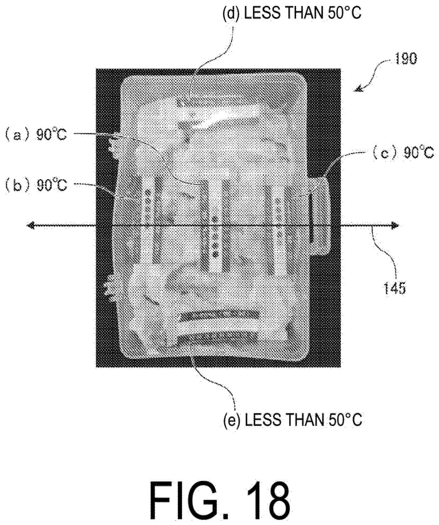

FIG. 18 illustrates a test result of heating the heat target object 190 placed vertically. Thermolabels (a), (b), and (c) arranged side by side along the directional irradiation axis 145, that is, along the line connecting the midpoints of the two long sides of the tray all indicated 90°C. On the other hand, both thermolabels (d) and (e) arranged at a position away from the directional irradiation axis 145, that is, near the center of the short sides of the tray indicated less than 50°C.

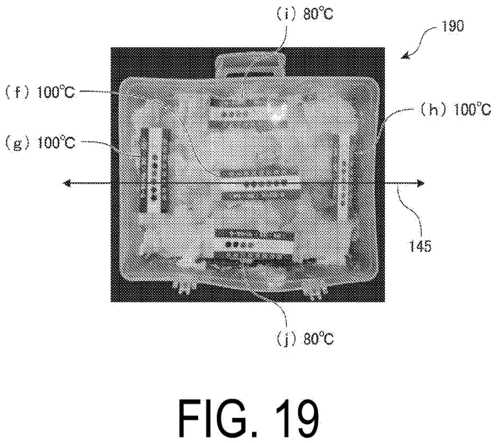

FIG. 19 illustrates a test result of heating the heat target object 190 placed horizontally. Thermolabels (f), (g), and (h) arranged side by side along the directional irradiation axis 145, that is, along the line connecting the midpoints of the two short sides of the tray all indicated 100°C. On the other hand, both thermolabels (i) and (j) arranged at a position away from the directional irradiation axis 145, that is, near the center of the long sides of the tray indicated 80°C.

All the results illustrated in FIGS. 18 and 19 made it clear that heating can be uniformly performed in a short time along the directional irradiation axis 145. In any case, a temperature gradient occurred such that the temperature decreased as the distance from the directional irradiation axis 145 increased, and the heating efficiency was higher on the directional irradiation axis 145 than that on the diffusion irradiation axis. By arranging the directional irradiation axis 145 having high heating efficiency so as not to intersect structures such as the conveyance device 60 and the food holding table 166, it has been found to be possible to perform heating with suppressed energy loss due to generation and absorption of standing waves due to reflection of microwaves.

### Experiment Example 2

The heating characteristics by the microwave irradiation device according to the above embodiment were further evaluated with a thermal indicator gel that is a food model as a heat target object.

### Method

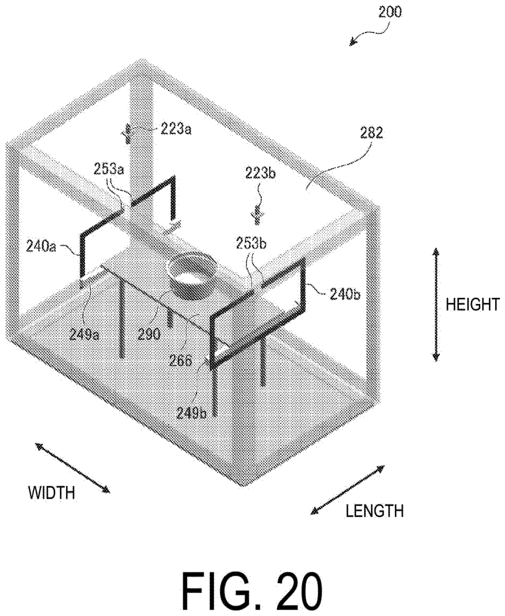

FIG. 20 illustrates an outline of a configuration example of a test device 200 used for evaluation. This test device 200 corresponds to the configuration of the part including the pair of antennas 40 facing each other in the microwave irradiation device 2 of the second embodiment described with reference to FIG. 4 and the configuration of the microwave irradiation device 6 of the sixth embodiment described with reference to FIG. 13. This situation corresponds to a state in which the irradiated object 90 is positioned in the middle of the two antennas 40 by the conveyance device 60 in the seventh embodiment described with reference to FIGS. 15A and 15B. The configuration of the test device 200 was as follows.

The test device 200 includes a metal housing 282 that shields electromagnetic waves. The metal housing 282 was formed of an aluminum material, and had dimensions of a width of 500 mm, a length of 350 mm, and a height of 400 mm. A holding table 266 was horizontally provided in the metal housing 282. The holding table 266 was made of a glass epoxy material, and had dimensions of a width of 331 mm and a thickness of 5 mm. One end of the holding table 266 in the width direction is provided with a first loop antenna 240a via a first bracket 249a, and the other end of the holding table 266 in the width direction is provided with a second loop antenna 240b via a second bracket 249b. The first bracket 249a and the second bracket 249b were each made of polyethylene (PE) material. Each of the first loop antenna 240a and the second loop antenna 240b was formed in a square shape with an aluminum material, and had outer dimensions of a length of 214 mm, a height of 111 mm, and a thickness of 2 mm. The first loop antenna 240a and the second loop antenna 240b were arranged so as to face each other, and installed such that the directional irradiation axes of the microwaves to be emitted became parallel to the holding table 266. The interval between the first loop antenna 240a and the second loop antenna 240b was 333 mm.

The material of the metal housing 282 is not limited to aluminum, and may be other metal materials such as iron and stainless steel. The material of the holding table 266, the first bracket 249a, and the second bracket 249b may be another material having a low dielectric constant and a low loss, such as a resin material such as polypropylene, polyethylene terephthalate, or polycarbonate, for example.

A microwave oscillator (not illustrated) was connected to a first feed port 223a and the second feed port 223b provided in the metal housing 282 via a coaxial cable not illustrated. This coaxial cable is branched in the middle, and power output from the oscillator is fed in parallel to the first feed port 223a and the second feed port 223b. The first feed port 223a is connected to a first power feed point 253a of the first loop antenna 240a. The second feed port 223b is connected to a second power feed point 253b of the second loop antenna 240b. By partway branching from one oscillator and feeding power to each antenna in parallel, it is possible to perform simultaneous irradiation without the output from one antenna being erroneously recognized as reflection by the other antenna.

The frequency of the output power of the microwave oscillator was 450 MHz. The microwave power output from the microwave oscillator is fed in phase to the first loop antenna 240a and the second loop antenna 240b. Microwaves are emitted from the first loop antenna 240a and the second loop antenna 240b. Here, the interval between the first loop antenna 240a and the second loop antenna 240b is 333 mm as described above, which is equivalent of 1/2 wavelength of the output wavelength λ = 666 mm.

As a food model 290, a thermal indicator gel was used. This thermal indicator gel contains xylose and glycine, and is configured to change color to brown when the temperature reaches approximately 70°C or higher due to the Maillard reaction. Electrical characteristics such as permittivity and electrical conductivity of the thermal indicator gel were adjusted to be generally equal to the electrical characteristics of commercially available potato salad by adjusting the concentration of oil, salt, or the like to be added. The food model 290 was prepared by filling a cup of polypropylene (PP) material with 150 g of the thermal indicator gel. No sealing was performed after filling.

This food model 290 was placed at an intermediate position between the first loop antenna 240a and the second loop antenna 240b on the holding table 266. That is, the distance from the first loop antenna 240a and the second loop antenna 240b to the center of food model 290 was 166.5 mm. The food model 290 was heated at an output of 150 W.

As a comparative experiment, the food model 290 was heated in a professional-use microwave oven (manufactured by Panasonic Corporation, with output of 250 W).

### Results

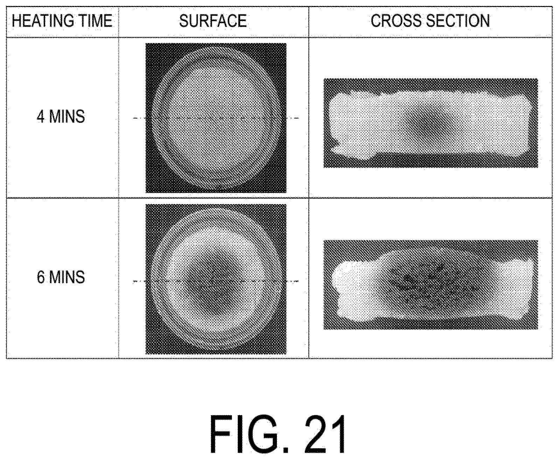

FIG 21 illustrates a photograph of the food model 290 after heating with an output of 150 W using the test device 200. In FIG. 21, the upper part illustrates a case where the heating time is 4 minutes, and the lower part illustrates a case where the heating time is 6 minutes. In FIG. 21, a left column illustrates a state of the surface of the food model 290 photographed from above. In this figure, the left-right direction is the direction of the directional irradiation axes of the first loop antenna 240a and the second loop antenna 240b. In FIG. 21, the right column illustrates a state of a longitudinal cross section of the food model 290 cut by a line indicated by a one-dot chain line in the left column.

As illustrated in FIG. 21, the center part of the food model 290 was uniformly discolored to brown, which indicates that the center part was uniformly heated.

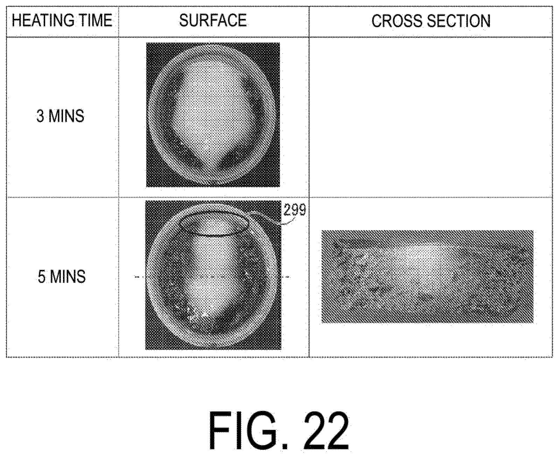

FIG. 22 illustrates a photograph of the food model 290 after heating with an output of 250 W using a professional-use microwave oven as a comparative experiment. In FIG. 22, the upper part illustrates a case where the heating time is 3 minutes, and the lower part illustrates a case where the heating time is 5 minutes. In FIG. 22, a left column illustrates a state of the surface of the food model 290 photographed from above. In FIG. 22, the right column illustrates a state of a longitudinal cross section of the food model 290 cut by a line indicated by a one-dot chain line in the left column.

When the professional-use microwave oven was used, the outer peripheral part of the food model 290 was discolored to dark brown, which indicates that overheating occurred at the outer peripheral part. It is assumed that the outer peripheral part of the food model 290 was continuously irradiated with microwaves while the microwaves were multiple-reflected in the oven. Furthermore, the heat generation generated in the outer peripheral part of the food model 290 was not equal along the container periphery, and a heat generation defect not generating heat occurred in a part surrounded by a circle 299 in the figure. This indicates that there is no uniformity in the standing wave distribution formed by reflection of microwaves in the metal housing. This suggested that there was no reproducibility of heating.

On the other hand, in the case of using the test device 200 according to the present embodiment, it was confirmed that the irradiation method suppressing the standing wave was capable of selectively heating the food center part.

### Experiment Example 3

In Experiment Example 2 described above, the heating situation at positions equidistant from the first loop antenna 240a and the second loop antenna 240b was examined. In the present experiment example, a heating situation at a position biased to any one of the first loop antenna 240a and the second loop antenna 240b was examined. This situation corresponds to the state of the first embodiment described with reference to FIG. 1B and the like or the third embodiment described with reference to FIG. 6, or the state in which the irradiated object 90 is conveyed by the conveyance device 60 to a position biased with respect to the two antennas 40 in the seventh embodiment described with reference to FIG. 15B and the like.

### Method

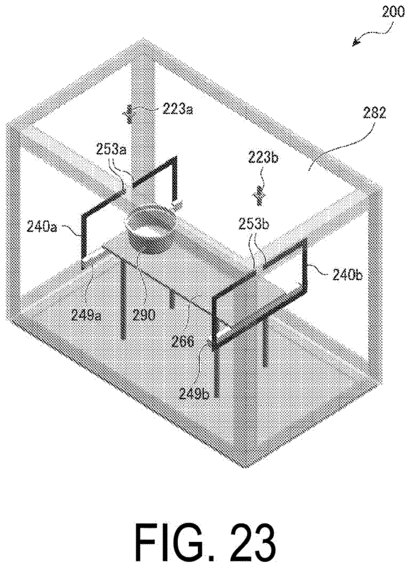

FIG. 23 is a view illustrating an outline of an implementation situation of the present experiment example. In the present experiment example, the test device 200 illustrated in FIG. 20 was used. The food model 290 was placed at a position where the distance from the first loop antenna 240a to the center of the food model 290 was 56.5 mm. The output of the test device 200 was 150 W, and heating was performed for 5 minutes.

### Results

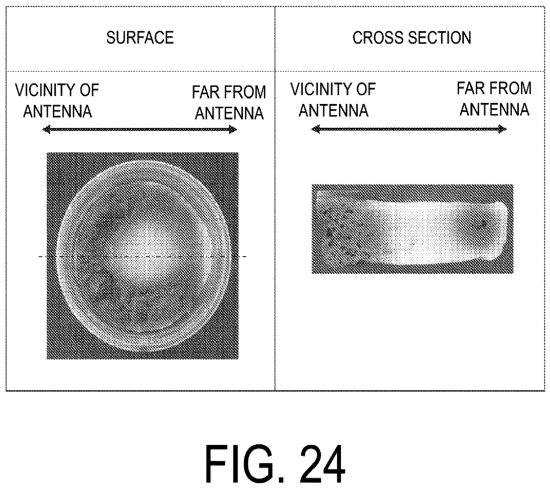

FIG. 24 illustrates a photograph of the food model 290 after heating. In FIG. 24, the left photograph illustrates a state of the surface of the food model 290 photographed from above. In this figure, the left-right direction is the direction of the directional irradiation axes of the first loop antenna 240a and the second loop antenna 240b, the left side is the first loop antenna 240a side close to the food model 290, and the right side is the second loop antenna 240b side away from the food model 290. In FIG. 24, the right photograph illustrates a state of a longitudinal cross section of the food model 290 cut at the position of the one-dot chain line illustrated in the left photograph. Similarly, the left side is the first loop antenna 240a side close to the food model 290, and the right side is the second loop antenna 240b side away from the food model 290.

FIG. 24 made clear that the outer peripheral part of the food model 290 generated heat in this case. It was found that the heat generation range on the antenna vicinity side was wider than the heat generation range on the antenna far side, and the degree of heat generation was also large. It has been found that when the heat target object is arranged asymmetrically with respect to the pair of antennas while being close to one side of the pair of antennas facing each other, and the heat target object is irradiated with microwaves at different distances from the respective antennas, diffraction of the electric field to the outer peripheral part of the heat target object is increased, and the outer peripheral part can be efficiently heated without causing heat generation defects.

### Experiment Example 4

The situation of Experiment Example 2 described above was analyzed by numerical simulation.

### Method

Coupled analysis of heat and electromagnetic field was performed using CST STUDIO SUITE (manufactured by Dassault Systems), which is thermal coupled analysis software. An analytical model of the test device 200 illustrated in FIG. 20 was constructed. The heat target object was an imitation of 150 g of commercially available potato salad packed in a cup made of polypropylene (PP) material. The electrical characteristics of the heat target object were relative permittivity εr = 51, electrical conductivity ρ = 1.2 s/m, and dissipation factor tanδ = 0.95, based on actually measured values of commercially available potato salad.

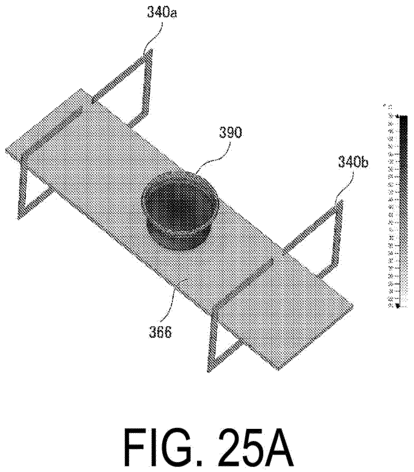

As illustrated in FIG. 25A illustrating the analysis result, this heat target object 390 was placed at an intermediate position between a first loop antenna 340a and a second loop antenna 340b facing each other. That is, the distance from the center of the heat target object 390 to each antenna was 166.5 mm.

In the present analysis experiment example, a holding table 366 on which the heat target object 390 is placed is arranged so as to penetrate the first loop antenna 340a and the second loop antenna 340b. In this respect, this model is closer to the microwave irradiation device 6 according to the sixth embodiment illustrated in FIG. 13 rather than the test device 200 illustrated in FIG. 20. On the other hand, since the physical property values of the holding table 366 are set to simulate a resin with a low dielectric constant and a low loss, it can be assumed that this model substantially reproduces both the device configuration of the test device 200 illustrated in FIG. 20 and the configuration of the microwave irradiation device 6 according to the sixth embodiment illustrated in FIG. 13.

Using the above model, the temperature distribution in the case of heating for 5 minutes with the output of 150 W was analyzed.

### Results

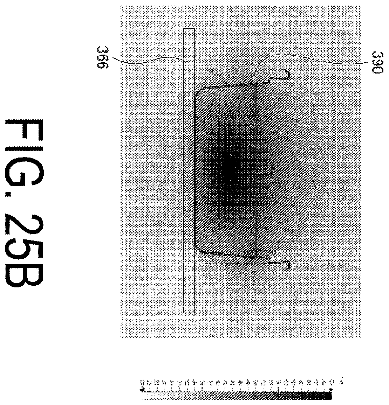

FIGS. 25A and 25B illustrate thermal coupled analysis results. FIG. 25A is a perspective view illustrating the analysis result, and FIG. 25B illustrates a cross section perpendicular to the directional irradiation axes of first loop antenna 340a and second loop antenna 340b passing through the center of the heat target object 390. Similarly to the result of Experiment Example 2 illustrated in FIG. 21, the center part of the heat target object 390 strongly generated heat and reached a high temperature. The results of the present numerical analysis were in good agreement with the experimental results. This numerical analysis was confirmed to be reliable.

### Experiment Example 5

Analysis by numerical simulation was performed on the device configuration corresponding to the microwave irradiation device 1 of the first embodiment described with reference to FIG. 1B and the like, the microwave irradiation device 4 of the fourth embodiment described with reference to FIG. 7, and the microwave irradiation device 5 of the fifth embodiment described with reference to FIG. 10A and the like.

### Method

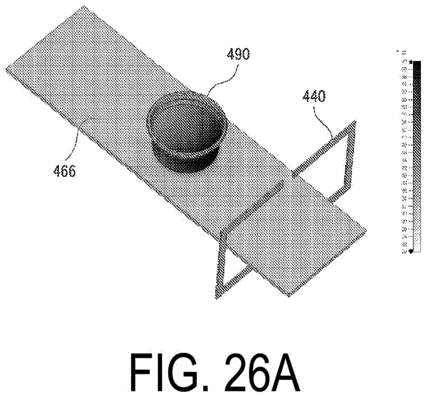

The same analysis as in Experiment Example 4 was performed. As illustrated in FIG. 26A illustrating the analysis result, a model was constructed and analyzed, the model corresponding to a part including one antenna 40 in the microwave irradiation device 1 of the first embodiment described with reference to FIG. 1B, or the microwave irradiation device 4 of the fourth embodiment described with reference to FIG. 7 and the microwave irradiation device 5 of the fifth embodiment described with reference to FIG. 10A and the like. That is, in this model, a loop antenna 440 was arranged only on one side of a heat target object 490 placed on a holding table 466. The heat target object 490 was similar to the heat target object 390 of Experiment Example 4.

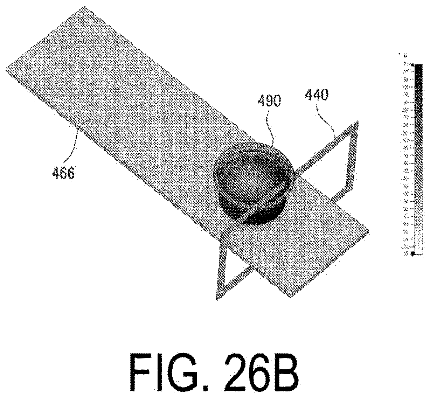

In the analysis whose result is illustrated in FIG. 26A, the distance from the loop antenna 440 to the center of the heat target object 490 was 166.5 mm. In the analysis whose result is illustrated in FIG. 26B, the distance from the loop antenna 440 to the center of the heat target object 490 was 56.5 mm. The output was 150 W, and the temperature distribution in the case of heating for 5 minutes was analyzed.

### Results

FIGS. 26A and 26B illustrate thermal coupled analysis results. As illustrated in FIG. 26A, it has been found that, when the distance from the loop antenna 440 to the center of the heat target object 490 is 166.5 mm, heat is generated particularly on the side close to the loop antenna 440 in the outer peripheral part of the heat target object 490. It has been found that the outer peripheral part of the heat target object on the antenna side can be selectively heated by arranging the antenna on only one side with respect to the heat target object and asymmetrically irradiating the heat target object with microwaves.

FIG. 26B illustrates a result of a case where the distance between the heat target object 490 and the loop antenna 440 is reduced as compared with the case of FIG. 26A, and the distance from the loop antenna 440 to the center of the heat target object 490 is 56.5 mm. By reducing the distance between the heat target object 490 and the loop antenna 440, the temperature in a wider range of the outer peripheral part of the heat target object 490 increased more than that in the case of FIG. 26A. This result was consistent with the result of Experiment Example 3 illustrated in FIG. 24.

It has been found that a region where heat is generated in the heat target object can be adjusted by asymmetrically emitting the heat target object with microwaves and further adjusting the distance between the heat target object and the antenna.

### Experiment Example 6

An experiment to examine a heating method was conducted.

### Method

Using the test device 200 illustrated in FIG. 20, an experiment was conducted using, as a heat target object, a sample of 140 g of commercially available potato salad filled in a cup made of polypropylene (PP) material, the sample being not sealed after filling. Heating conditions were as follows. First, the heat target object was placed at an intermediate position between the first loop antenna 240a and the second loop antenna 240b, and heated with an output of 150 W for 2.5 minutes. After heating, the heat target object was left as an interval for 1.5 minutes. Subsequently, the heat target object was placed at a position where the distance from the first loop antenna 240a to the center of the heat target object was 56.5 mm, and the heat target object was heated with an output of 150 W for 2.5 minutes. The temperature of this heat target object during this time was measured using an optical fiber thermometer.

### Results

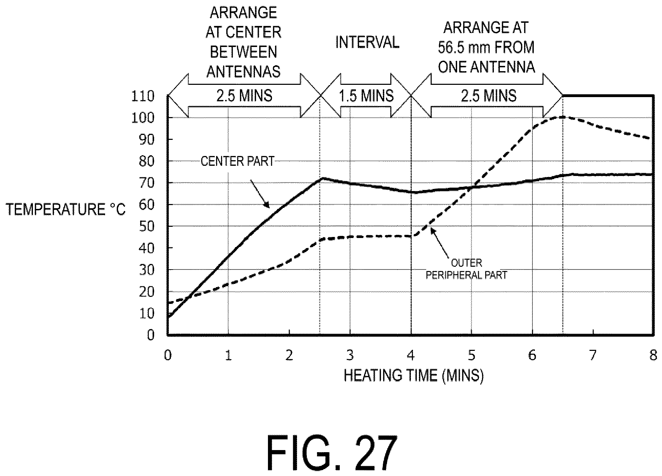

FIG. 27 illustrates results of temperature measurement of the center part (solid line) and the outer peripheral part (broken line) of the heat target object. When the heat target object was placed at an intermediate position between the first loop antenna 240a and the second loop antenna 240b, the center part of the heat target object was heated more than the outer peripheral part, and the temperature after heating for 2.5 minutes was 70°C at the center part and 45°C at the outer peripheral part. There was not much temperature decrease in the interval period of 1.5 minutes, and the temperature at the end of the interval period was 67°C in the center part and 45°C in the outer peripheral part. Thereafter, when the heat target object was brought close to the first loop antenna 240a side and heated, the outer peripheral part of the heat target object was heated more than the center part, and the temperature after heating for 2.5 minutes became 73 °C in the center part and 100°C in the outer peripheral part.

It has been found that the center part and the outer peripheral part can be heated and the entire heat target object can be uniformly heated by combining the arrangement of the heat target object at the intermediate position between the first loop antenna 240a and the second loop antenna 240b and the uniform emission of microwaves from both antennas with the arrangement of the heat target object close to the first loop antenna 240a and the non-uniform emission of microwaves from both antennas. That is, as in the microwave irradiation device 5 of the fifth embodiment and the microwave irradiation device 7 of the seventh embodiment, it has been found that by moving the irradiated object 90 by the conveyance device 60 to change the positional relationship between the antenna 40 and the irradiated object 90, it is possible to heat the center part and the outer peripheral part of the irradiated object 90 and possible to uniformly heat the entire irradiated object 90.

### Experiment Example 7

A test device corresponding to the microwave irradiation device 7 of the seventh embodiment described with reference to FIG. 15B and the like was produced, and the heating characteristics in the case of heating the heat target object while conveying it were evaluated.

### Method

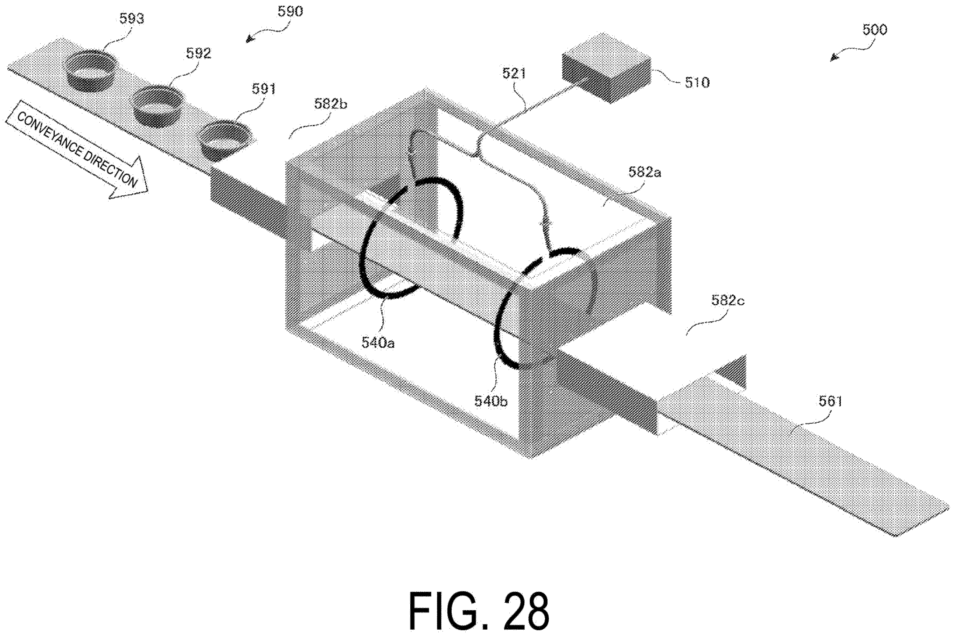

FIG. 28 is a view illustrating an outline of a configuration example of a test device 500 according to the present experiment example. The test device 500 includes a first metal housing 582a, a second metal housing 582b, and a third metal housing 582c that shield electromagnetic waves. The first metal housing 582a was formed of an aluminum material, and had dimensions of a length of 440 mm along the conveyance direction, a width of 350 mm orthogonal to the conveyance direction, and a height of 400 mm. A conveyor 561 made of resin and having a width of 140 mm was provided so as to pass through the inside of the first metal housing 582a. The inlet part of the conveyor 561 of the first metal housing 582a was provided with the second metal housing 582b so as to be connected to the first metal housing 582a, and the outlet part of the conveyor 561 of the first metal housing 582a was provided with the third metal housing 582c so as to be connected to the first metal housing 582a. Each of the second metal housing 582b and the third metal housing 582c was formed of an aluminum material, and had dimensions of a length of 220 mm, a width of 248 mm, and a height of 80 mm.

In the first metal housing 582a, a circular first loop antenna 540a and a circular second loop antenna 540b were provided such that the conveyor 561 penetrates. Each of the first loop antenna 540a and the second loop antenna 540b was formed of an aluminum material, and had an inner diameter of 232 mm and a thickness of 2 mm. The first loop antenna 540a and the second loop antenna 540b were arranged so as to face each other, and installed such that the directional irradiation axis of the emitted microwave was parallel to the holding surface of the conveyor 561. The interval between the first loop antenna 540a and the second loop antenna 540b was 333 mm.

An oscillator 510 was connected to the first loop antenna 540a and the second loop antenna 540b via a coaxial cable 521. The frequency of the output power of the oscillator 510 was 450 MHz. The output power of the oscillator 510 is fed to the first loop antenna 540a and the second loop antenna 540b in parallel and in phase via the coaxial cable 521. The interval between the first loop antenna 540a and the second loop antenna 540b is 333 mm as described above, which is equivalent of 1/2 wavelength of the output wavelength λ = 666 mm. By partway branching from one oscillator and feeding power to each antenna in parallel, it is possible to perform simultaneous irradiation without the output from one antenna being erroneously recognized as reflection by the other antenna.

A sample of 140g of potato salad filled in a cup made of polypropylene (PP) material, the sample being not sealed after filling, was a heat target object 590. Three heat target objects 590, i.e., a first heat target object 591, a second heat target object 592, and a third heat target object 593, were prepared, and arranged on the conveyor 561 at predetermined intervals. The conveying speed of the conveyor 561 was 1 mm/sec, and the output was 300 W. The surface temperature of the potato salad after heating was measured by thermography installed at the outlet of the third metal housing 582c.

As a comparative experiment, a similar cup-filled potato salad was heated with an output of 150 W for 5 minutes using a professional-use microwave oven, and the surface temperature was measured by thermography.

### Results

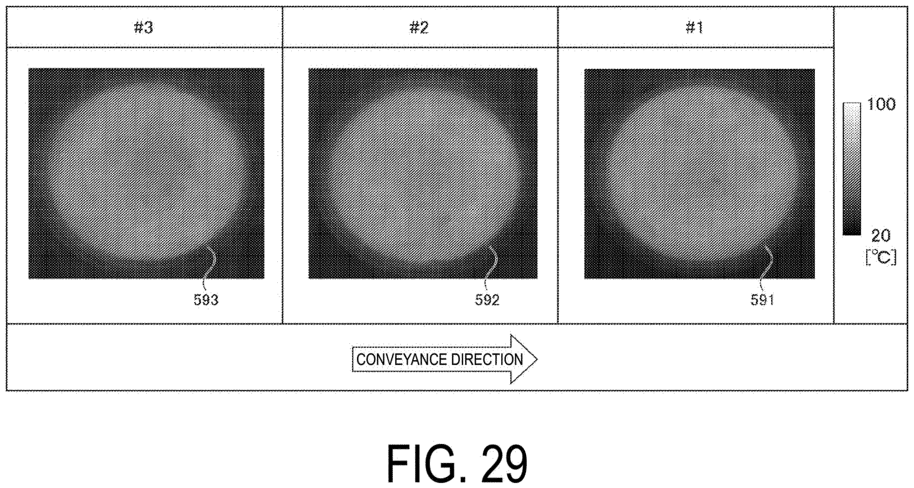

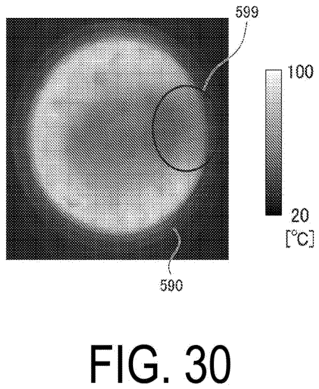

FIG. 29 illustrates images obtained by thermography of the first heat target object 591, the second heat target object 592, and the third heat target object 593 heated using the test device 500. FIG. 30 illustrates, as a comparative experiment, an image obtained by thermography of the heat target object 590 heated using a professional-use microwave oven.

As illustrated in FIG. 30, when a microwave oven is used for heating, it is assumed that microwaves are constantly emitted from the outer peripheral part of the heat target object 590 while being multiple-reflected in the oven, and overheating occurred in the outer peripheral part of the heat target object 590. In this comparative experiment, the temperature difference between the outer peripheral part and the center part was 33°C. Furthermore, the heat generation in the outer peripheral part of the heat target object 590 does not exhibit an equal temperature distribution along the periphery, and a low-temperature part occurred as in the part surrounded by a circle 599 in the figure. This indicates that there is no uniformity in the standing wave distribution formed by reflection of microwaves in the metal housing. This suggested that there was no reproducibility of heating.

On the other hand, as illustrated in FIG. 29, in each of the first heat target object 591, the second heat target object 592, and the third heat target object 593 heated using the test device 500, the outer peripheral part was slightly higher than the center part, but this temperature difference was about 7°C, and uniformity was high. As described above, it has been shown that the present heating method that suppresses power reflection can achieve highly uniform heating as compared with a heating method that actively uses power reflection as represented by a microwave oven.

### Experiment Example 8

The microwave irradiation device 7 of the seventh embodiment was analyzed by numerical simulation.

### Method

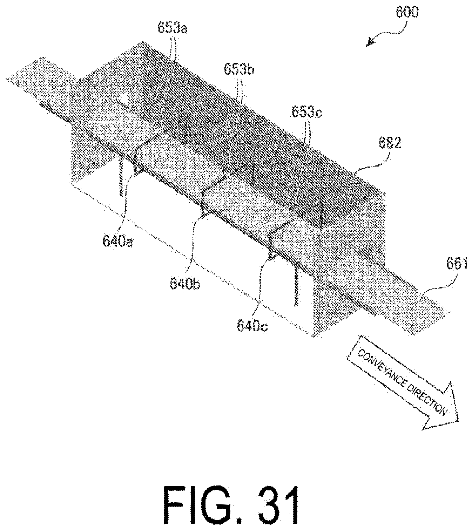

A model of the microwave irradiation device 7 according to the seventh embodiment illustrated in FIG. 31 was produced. In this model, a metal housing 682 was formed of an aluminum material, and had dimensions of a length of 1320 mm, a width of 350 mm, and a height of 400 mm. A conveyor 661 made of resin was provided so as to pass through the inside of the metal housing 682. In the metal housing 682, a first loop antenna 640a, a second loop antenna 640b, and a third loop antenna 640c, which were three loop antennas, were provided such that the conveyor 661 penetrates. Each of these loop antennas was made of an aluminum material, and had outer dimensions of 214 mm × 111 mm. The frequency of power fed to each of a first feed unit 653a of the first loop antenna 640a, a second feed unit 653b of the second loop antenna 640b, and a third feed unit 653c of the third loop antenna 640c was 450 MHz (wavelength λ = 666 mm). The distance between the loop antennas was 333 mm (λ/2).

The position of the second loop antenna 640b arranged at the center was set as the coordinate origin, and the electric field intensity formed between the antennas was analyzed.

As comparative analysis, the electric field intensity was calculated with respect to the irradiation distance from the oscillator when microwave oscillation was performed at a frequency of 450 MHz and an output electric field of 1 v/m in the waveguide.

Using the model illustrated in FIG. 31, analysis was performed with a sample prepared by filling a polypropylene (PP) material cup with 150 g of potato salad as a heat target object. Coupled analysis of heat and electromagnetic field was performed using CST STUDIO SUITE (manufactured by Dassault Systems), which is thermal coupled analysis software. The electrical physical property values of potato salad that is a heat target object were relative permittivity εr = 51, electrical conductivity ρ = 1.2 s/m, and dissipation factor tanδ = 0.95, based on actually measured values. The heat generation distribution of the heat target object when microwave heating was performed with an output of 150 W for a heating time of 5 minutes while conveying one heat target object was analyzed.

### Results

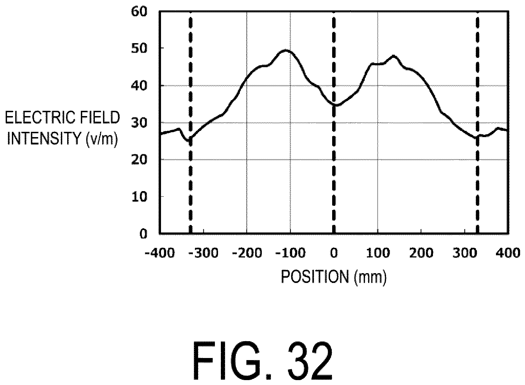

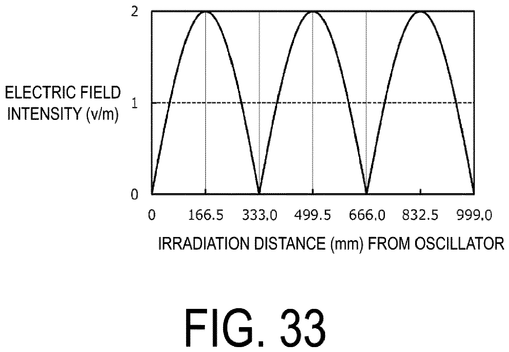

FIG. 32 illustrates a result of analyzing the electric field intensity formed between the antennas in the model illustrated in FIG. 31. In this figure, positions of -333 mm, 0 mm, and 333 mm indicated by broken lines indicate positions where loop antennas are arranged. FIG. 33 illustrates an analysis result of the electric field intensity with respect to the irradiation distance from an oscillator in a waveguide performed as comparative analysis.

As illustrated in FIG. 33, as is known, antinodes and nodes of the standing wave due to reflection from the metal housing are alternately formed in the waveguide. At the antinode position, the electric field intensity is twice the oscillator output, and at the node position, the electric field intensity becomes zero. That is, the difference in electric field intensity depending on the location is large. On the other hand, as illustrated in FIG. 32, in the microwave irradiation device according to the seventh embodiment, the electric field intensity distribution had high uniformity without nodes.

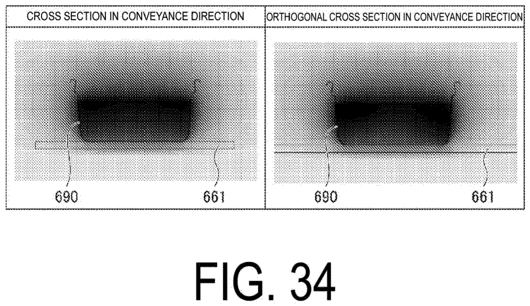

FIG. 34 illustrates the analysis result of the heat generation distribution of a heat target object 690 when the heat target object 690, which was 150 g of potato salad filled in a cup of polypropylene (PP) material, was heated. The left figure illustrates a cross section along the conveyance direction by the conveyor 661, and the right figure illustrates a cross section in a direction orthogonal to the conveyance direction by the conveyor 661. A uniform heat generation distribution in the heat target object 690 was confirmed.

Although the present invention has been described above with reference to the preferred embodiment, the present invention is not limited only to the embodiment described above, and various modifications can be made within the scope of the present invention.

The contents of the documents described in this description and the description of the Japanese application that is the basis of Paris priority of the present application are all incorporated herein.

## Claims

1. A microwave irradiation device, comprising:
a holder configured to hold an irradiated object;
a power feeder configured to conduct with an oscillator; and
a directional antenna configured to emit microwaves from an irradiation source in an irradiation surface by power feed through conduction via the power feeder.

2. The microwave irradiation device according to claim 1, wherein
the holder is a conveyance device that conveys the irradiated object in a conveyance direction, and
the microwave irradiation device includes an antenna group including a plurality of the antennas arranged along the conveyance direction.

3. The microwave irradiation device according to claim 2, wherein the antenna is arranged such that a directional irradiation axis of microwaves emitted from the irradiation source does not intersect a structure that reflects the microwaves and constitutes the conveyance device.

4. The microwave irradiation device according to claim 2 or 3, wherein the antenna group includes the plurality of antennas arranged on both sides across the conveyance device.

5. The microwave irradiation device according to any of claims 2 to 4, wherein the antenna is a loop antenna in which the irradiation surface is an opening surface.

6. The microwave irradiation device according to claim 5, further comprising a conveyance device group including a plurality of the conveyance devices arranged on both sides of the opening surface of the loop antenna.

7. The microwave irradiation device according to claim 1, wherein the antenna is a loop antenna in which the irradiation surface is an opening surface.

8. The microwave irradiation device according to claim 7, wherein at least any one of the loop antenna or the holder is configured to move along a directional irradiation axis of the microwave emitted from the irradiation source to change a relative positional relationship between the loop antenna and the holder.

9. The microwave irradiation device according to claim 7 or 8, wherein
the holder is provided so as to penetrate the opening surface.

10. The microwave irradiation device according to claim 9, wherein the holder is configured to move in a direction penetrating the opening surface.

11. The microwave irradiation device according to any of claims 7 to 10, wherein the loop antenna is arranged such that a directional irradiation axis of the microwave emitted from the irradiation source does not cross a structure that reflects the microwave and constitutes the holder.

12. The microwave irradiation device according to any of claims 7 to 11, further comprising: an antenna group including a plurality of the loop antennas provided along the directional irradiation axis of the microwave emitted from the irradiation source.

13. The microwave irradiation device according to any of claims 7 to 12, further comprising:
an antenna group including a plurality of the loop antennas, wherein
the holder is provided so as to penetrate a plurality of the opening surfaces of the antenna group.

14. The microwave irradiation device according to claim 13, wherein the holder is configured to move in a direction penetrating the opening surface.

15. The microwave irradiation device according to any of claims 12 to 14, wherein the loop antenna constituting the antenna group is arranged such that at least a directional irradiation axis of the microwave emitted from the irradiation source does not cross a structure that reflects the microwave and constitutes the holder provided between the opening surface of the loop antenna and the opening surface of another loop antenna constituting the antenna group, the opening surface of the other loop antenna facing the opening surface of the loop antenna.

16. An irradiation method of microwaves for emitting microwaves to an irradiated object by a directional antenna configured to emit microwaves to the irradiated object from an irradiation source in an irradiation surface by power feed,
the irradiation method comprising:
simultaneously and uniformly emitting microwaves from a plurality of the antennas arranged on both sides of the irradiated object.

17. The irradiation method according to claim 16, wherein power is fed to the plurality of antennas from one oscillator in parallel.

18. The irradiation method according to claim 16 or 17, further comprising non-uniformly emitting microwaves from the antennas arranged on both sides or one side of the irradiated object.

19. The irradiation method according to claim 18, wherein the uniform emission of microwaves includes emitting microwaves having an equal irradiation intensity to the irradiated object from a pair of the antennas arranged so as to face each other at an equal distance from the irradiated object.

20. The irradiation method according to claim 19, wherein
the non-uniform emission of microwaves includes:
emitting microwaves to the irradiated object from one of the pair of antennas; and
emitting microwaves to the irradiated object from another of the pair of antennas.

21. The irradiation method according to claim 19, wherein the non-uniform emission of microwaves includes bringing the irradiated object close to one of the pair of antennas that emit microwaves with equal irradiation intensity.

22. The irradiation method according to claim 18, further comprising:
conveying the irradiated object in a conveyance direction by a conveyance device, wherein
a pair of the antennas are arranged at a first position of the conveyance device so as to face each other at an equal distance from the first position, the uniform emission of microwaves includes emitting microwaves, having equal irradiation intensity, to the irradiated object located at the first position from each of the pair of antennas, and
the antenna is arranged on at least one side of a second position at the second position in the conveyance device, or the non-uniform emission of microwaves includes emitting microwaves to the irradiated object located at the second position from the antenna on the one side.

23. A manufacturing method of food, comprising emitting microwaves to a food to heat the food, wherein
emission of the microwaves is performed by a directional antenna configured to emit microwaves from an irradiation source in an irradiation surface by power feed.

24. The manufacturing method of food according to claim 23, wherein emission of the microwaves includes feeding power from one oscillator in parallel to a plurality of the antennas arranged on both sides of the food and simultaneously and uniformly emitting the microwaves from the plurality of antennas.

25. The manufacturing method of food according to claim 24, further comprising non-uniformly emitting microwaves from the antennas arranged on both sides or one side of the food.

26. The manufacturing method of food according to any of claims 23 to 25, wherein the food is a packaged food.

27. The manufacturing method of food according to claim 23, wherein
emission of the microwaves is performed by using
a power feeder configured to conduct with an oscillator, and
a loop antenna configured to emit microwaves by power feed through conduction via the power feeder, the loop antenna being the directional antenna and having the irradiation surface that is an opening surface.
